(19) Europäisches Patentamt / European Patent Office / Office européen des brevets

(11) **EP 4 574 903 A1**

(12) **EUROPEAN PATENT APPLICATION**
published in accordance with Art. 153(4) EPC

(43) Date of publication:
**25.06.2025 Bulletin 2025/26**

(21) Application number: **23855083.4**

(22) Date of filing: **02.08.2023**

(51) International Patent Classification (IPC):
**C08L 67/02** (2006.01)   **C08G 63/60** (2006.01)
**C08G 63/183** (2006.01)   **C08J 5/18** (2006.01)
**B29C 48/08** (2019.01)   **B29C 48/18** (2019.01)
**B29C 55/04** (2006.01)   **B29C 55/12** (2006.01)
**B32B 27/36** (2006.01)

(52) Cooperative Patent Classification (CPC):
**B29C 48/08; B29C 48/18; B29C 55/04;
B29C 55/12; B32B 27/36; C08G 63/183;
C08G 63/60; C08J 5/18; C08L 67/02**

(86) International application number:
**PCT/KR2023/011349**

(87) International publication number:
**WO 2024/039116 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.08.2022   KR 20220102297**

(71) Applicant: **SK Chemicals Co., Ltd.
Seongnam-si, Gyeonggi-do 13494 (KR)**

(72) Inventors:
• **HWANG, Da-Young
  Seongnam-si, Gyeonggi-do 13494 (KR)**
• **LEE, Boo-Youn
  Seongnam-si, Gyeonggi-do 13494 (KR)**

(74) Representative: **Haseltine Lake Kempner LLP
One Portwall Square
Portwall Lane
Bristol BS1 6BH (GB)**

(54) **POLYESTER RESIN MIXTURE, METHOD FOR PREPARING SAME, AND POLYESTER FILM PREPARED THEREFROM**

(57)   The present invention relates to: a polyester resin mixture comprising a polyester copolymer prepared using a recycled monomer; a method for preparing same; and a polyester film prepared thereby, wherein the polyester resin mixture has excellent extrusion properties (processability), and thus can provide a polyester film having excellent physical properties and/or quality.

[Fig. 1]

EP 4 574 903 A1

## Description

### Technical Field

The present invention relates to a polyester resin mixture comprising a polyester copolymer prepared using a recycled monomer, to a process for preparing the same, and to a polyester film prepared therefrom.

### Background Art

Polyester among polymers is used as a material in various fields by virtue of its excellent mechanical strength, thermal resistance, transparency, and gas barrier properties. In particular, polyester films or plates have good transparency and excellent mechanical strength, so that they are widely used for cases, boxes, partitions, shelves, panels, packaging materials, building materials, interior and exterior materials, and the like.

As a result, waste of plastics such as polyester is generated globally at an unmanageable level every year. Recently, countries around the world have prepared regulations and plans for recycling waste plastic resources, including waste polyester.

Methods for recycling waste polyester include a physical method of recycling waste polyester through processes such as crushing and melting and a chemical method of recycling waste polyester through a depolymerization process that breaks the ester bonds of waste polyester.

Although various attempts have been made to recycle waste polyester through the physical or chemical methods, there are limitations in achieving a polyester with good physical properties due to foreign substances in waste polyester. In particular, a polyester prepared using a recycled monomer obtained by the depolymerization of waste polyester has poor extrudability (processability) and transparency due to side reactants (e.g., DEG esters) formed during the depolymerization process; thus, its uses are limited.

[Prior Art Document]

[Patent Document]

(Patent Document 1) Korean Laid-open Patent Publication No. 2013-0041205

### Disclosure of Invention

### Technical Problem

The present inventors have conducted various studies in order to solve the above-mentioned conventional problems. As a result, it has been discovered that, when a polyester copolymer is prepared using a recycled monomer, the types and amounts of the recycled monomer and raw material monomers are optimized to obtain a polyester copolymer, which is mixed with polyethylene terephthalate, a polyester resin mixture having significantly enhanced extrudability (processability) is obtained.

Accordingly, an object of the present invention is to provide a polyester resin mixture comprising a polyester copolymer prepared using a recycled monomer and polyethylene terephthalate, whose extrudability is controlled, and a process for preparing the same.

In addition, another object of the present invention is to provide a polyester film prepared from the polyester resin mixture and a process for preparing the same.

### Solution to Problem

In order to solve the above problem, the present invention provides a polyester resin mixture, which comprises a polyester copolymer comprising a repeat unit (a) derived from a recycled monomer, a repeat unit (b) derived from a dicarboxylic acid compound, and a repeat unit (c) derived from a diol compound; and polyethylene terephthalate, wherein, when the mixture is extruded to a thickness of 1 mm, the extrudability coefficient according to the following Equation 1 is 6 or less.

[Equation 1]

$$\text{Extrudability coefficient} = A / 10^7$$

In Equation 1, A is the quantitative analysis value (area/g) of oligomers confirmed through gas chromatography (GC) analysis of the polyester copolymer.

In addition, the present invention provides a process for preparing a polyester resin mixture, which comprises feeding a recycled monomer, a dicarboxylic acid compound, and a diol compound to a reactor and carrying out an esterification reaction at a pressure of 0 to 10.0 kgf/cm$^2$ and a temperature of 150 to 300°C to obtain a reactant; subjecting the reactant to a polycondensation reaction to obtain a polyester copolymer; and mixing the polyester copolymer with polyethylene terephthalate.

In addition, the present invention provides a polyester film, which is prepared from the polyester resin mixture.

In addition, the present invention provides a process for preparing a polyester film, which comprises preparing an unstretched sheet from the polyester resin mixture; and stretching the unstretched sheet.

## Advantageous Effects of Invention

Since the polyester resin mixture according to the present invention has an extrudability coefficient controlled to a specific range, it prevents contamination of process equipment when various articles are manufactured using it, while imparting excellent extrudability (processability), transparency, heat shrinkage (stretchability), and the like. Accordingly, the present invention can provide an article (for example, a polyester film) with excellent physical properties and/or quality even when a polyester copolymer prepared using a recycled monomer is used.

## Brief Description of Drawing

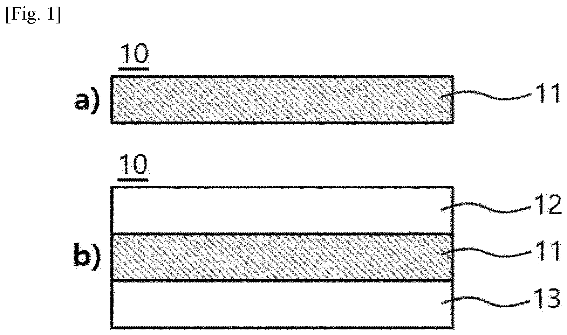

Fig. 1 is a cross-sectional view of a polyester film according to an embodiment of the present invention.

## Best Mode for Carrying out the Invention

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

## Polyester resin mixture

The present invention provides a polyester resin mixture, whose extrudability is controlled, so that it can produce polyester articles having excellent physical properties even when the content of recycled components is high. Specifically, the polyester resin mixture comprises a polyester copolymer comprising a repeat unit (a) derived from a recycled monomer, a repeat unit (b) derived from a dicarboxylic acid compound, and a repeat unit (c) derived from a diol compound; and polyethylene terephthalate, which will be described as follows.

Here, the term "derived" may mean that a certain part or unit originating from a specific compound is contained in the result obtained by a chemical reaction of the specific compound.

In addition, the term "recycled component" may refer to a monomer obtained by decomposing, depolymerizing, reprocessing, or repolymerizing waste plastics by physical or chemical methods, or a component originating from a polymer. Specifically, the recycled component may refer to a component at least one selected from a group consisting of recycled bis-2-hydroxyethyl terephthalate (recycled-BHET), recycled ethylene glycol (recycled-EG), recycled cyclohexanedimethanol (recycled-CHDM), recycled terephthalic acid (recycled-TPA), recycled isophthalic acid (recycled-IPA), recycled dimethyl terephthalate (recycled-DMT), recycled dimethyl isophthalate (recycled-DMI), mechanically recycled polyethylene terephthalate (mechanically-recycled-PET), and chemically recycled polyethylene terephthalate (chemically-recycled-PET).

### Polyester copolymer

The polyester copolymer according to the present invention comprises a repeat unit (a) derived from a recycled monomer, a repeat unit (b) derived from a dicarboxylic acid compound, and a repeat unit (c) derived from a diol compound. That is, the polyester copolymer according to the present invention is obtained by an esterification reaction and/or a polycondensation reaction of the recycled monomer, the dicarboxylic acid compound, and the diol compound.

The recycled monomer forming the repeat unit (a) is not particularly limited as long as it is a monomer obtained from waste plastic (e.g., waste polyester). Specifically, it may be recycled bis-2-hydroxyethyl terephthalate (recycled-BHET, r- BHET). More specifically, the r-BHET may be obtained by the depolymerization of waste polyester (e.g., waste PET, waste PETG) through a chemical method such as glycolysis, hydrolysis, methanolysis, and aminolysis. Since r-BHET obtained by the depolymerization method has high purity, a polyester resin mixture comprising a polyester copolymer prepared using it may have excellent extrudability (processability), transparency, stretchability, and the like.

The repeat unit (a) may be contained in an amount of 1% by weight or more, 5% by weight or more, 10% by weight or more, 30% by weight or more, 50% by weight or more, 70% by weight or more, or 90% by weight or more (for example, 1 to 95% by weight, 3 to 80% by weight, 5 to 75% by weight, or 7 to 70% by weight), based on the total weight of the polyester copolymer. Specifically, the polyester copolymer may comprise the repeat unit ($a_{r\text{-}BHET}$) derived from the r-BHET in an amount of 7% by weight or more, 10% by weight or more, 30% by weight or more, or 50% by weight or more (for example, 1 to 95% by weight, 3 to 80% by weight, 5 to 75% by weight, 7 to 70% by weight), based on the total weight of the polyester copolymer. As the repeat unit (a) is contained in the above content range, a polyester resin mixture with excellent extrudability (processability), stretchability, and the like can be obtained even when a recycled monomer is used.

The dicarboxylic acid compound forming the repeat unit (b) is not particularly limited. Specifically, the dicarboxylic acid compound may be a compound comprising at least one selected from the group consisting of terephthalic acid, isophthalic acid, dimethyl isophthalate, phthalic acid, dimethyl terephthalate, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid. More specifically, the dicarboxylic acid compound may be at least one selected from the group consisting of terephthalic acid, isophthalic acid, dimethyl isophthalate, and dimethyl terephthalate.

In addition, the dicarboxylic acid compound may comprise a recycled monomer derived from waste plastic. Specifically, the dicarboxylic acid compound may be a compound comprising at least one selected from the group consisting of recycled terephthalic acid (recycled-TPA), recycled isophthalic acid (recycled-IPA), recycled dimethyl isophthalate (recycled-DMI), and recycled dimethyl terephthalate (recycled-DMT).

The repeat unit (b) may be contained in an amount of 0 to 50% by weight, greater than 0 to 25% by weight, 1 to 15% by weight, 1 to 10% by weight, or 1 to 5% by weight, based on the total weight of the polyester copolymer.

The diol compound forming the repeat unit (c) is not particularly limited. Specifically, it may be a compound comprising at least one selected from the group consisting of isosorbide, ethylene glycol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, cyclohexanedimethanol (such as 1,2-cyclohexanedimethanol, 1,3-cyclohexanedimethanol, 1,4-cyclohexanedimethanol, or the like), and cyclohexanedimethanol derivatives (such as 4-(hydroxymethyl)cyclohexylmethyl-4-(hydroxymethyl)cyclohexanecarboxylate, 4-(4-(hydroxymethyl)cyclohexylmethoxymethyl)cyclohexylmethanol, or the like). More specifically, the diol compound may be at least one selected from the group consisting of ethylene glycol, diethylene glycol, 1,4-cyclohexanedimethanol, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol.

In addition, the diol compound may comprise a recycled monomer derived from waste plastic. Specifically, the diol compound may be a compound comprising at least one selected from the group consisting of recycled ethylene glycol (recycled-EG) and recycled cyclohexanedimethanol (recycled-CHDM).

The repeat unit (c) may be contained in an amount of 0 to 50% by weight, greater than 0 to 25% by weight, 1 to 15% by weight, or 1 to 5% by weight, based on the total weight of the polyester copolymer.

Here, in light of the extrudability of the polyester resin mixture, the repeat unit (c) may comprise a repeat unit ($c_1$) derived from diethylene glycol in an amount of 0 to 30% by mole, greater than 0 to 25% by mole, 1 to 20% by mole, 3 to 18% by mole, 5 to 16% by mole, or 7 to 15% by mole, based on the total number of moles of the repeat unit (c). In addition, the repeat unit (c) may comprise a repeat unit ($c_2$) derived from cyclohexanedimethanol (1,4-cyclohexanedimethanol) in an amount of 0 to 45% by mole, greater than 0 to 40% by mole, 1 to 35% by mole, 3 to 35% by mole, 5 to 34% by mole, 10 to 33% by mole, or 13 to 33% by mole, based on the total number of moles of the repeat unit (c). In addition, the repeat unit (c) may comprise a repeat unit ($c_3$) derived from a cyclohexanedimethanol derivative in an amount of 0 to 25% by mole, greater than 0 to 20% by mole, 0.5 to 20% by mole, 1 to 10% by mole, or 3 to 5% by mole, based on the total number of moles of the repeat unit (c). In addition, the repeat unit (c) may comprise a repeat unit ($c_4$) derived from neopentyl glycol in an amount of 0 to 45% by mole, greater than 0 to 30% by mole, 1 to 25% by mole, or 5 to 20% by mole, based on the total number of moles of the repeat unit (c).

The polyester copolymer according to the present invention may have an intrinsic viscosity of about 0.45 to 1.2 dl/g, about 0.55 to 1.0 dl/g, about 0.60 to 1.0 dl/g, or about 0.60 to 0.9 dl/g, when measured at 35°C as it is dissolved in orthochlorophenol at a concentration of 1.2 g/dl at 150°C for 15 minutes. As the intrinsic viscosity is within the above range, the polyester copolymer has the required (appropriate) molecular weight to have excellent mechanical properties, and it can be homogeneously mixed with polyethylene terephthalate under mild pressure and temperature conditions to facilitate the molding of the polyester resin mixture.

Polyethylene terephthalate

Polyethylene terephthalate according to the present invention may be obtained through an esterification reaction and/or a polycondensation reaction of a diol compound and a dicarboxylic acid compound commonly known. Each of the diol compound and the dicarboxylic acid compound may be a virgin monomer or a recycled monomer. In addition, the polyethylene terephthalate may be obtained through processes such as pulverization and melting of waste polyethylene terephthalate collected after use.

Specifically, the polyethylene terephthalate may be one or more selected from the group consisting of mechanically recycled polyethylene terephthalate (mechanically-recycled-PET, MR-PET), chemically recycled polyethylene terephthalate (chemically-recycled-PET, CR-PET), and virgin polyethylene terephthalate (virgin PET).

In addition, the polyethylene terephthalate may be crystalline polyethylene terephthalate. Specifically, the polyethylene terephthalate may be polyethylene terephthalate having a crystallization temperature (Tc) of 190°C or lower, 180°C or lower, or 170°C or lower (e.g., 130 to 170°C).

In light of extrudability, stretchability, and the like, the polyester resin mixture according to the present invention may have a weight ratio of the polyester copolymer and the polyethylene terephthalate of 1:99 to 99:1, a weight ratio of 5:95 to 95:5, a weight ratio of 10:90 to 90:10, a weight ratio of 15:85 to 85:15, or a weight ratio of 20:80 to 80:20.

When the polyester resin mixture is extruded to a thickness of 1 mm, the extrudability coefficient according to the following Equation 1 may be 6 or less.

$$[\text{Equation 1}]$$

$$\text{Extrudability coefficient} = A / 10^7$$

In Equation 1, A is the quantitative analysis value (area/g) of oligomers confirmed through gas chromatography (GC) analysis of the polyester copolymer.

The oligomer in the definition of A may refer to a polymer with a molecular weight of 1,000 g/mole or less (specifically, 500 to 1,000 g/mole).

As the extrudability coefficient according to Equation 1 is controlled to 6 or less in the polyester resin mixture according to the present invention, it is possible to minimize the plate-out phenomenon of a roll and the generation of out-gas during extrusion. Thus, when a polyester article is manufactured using the polyester resin mixture according to the present invention, it is possible to obtain a polyester article (e.g., polyester film) with excellent physical properties (e.g., heat shrinkage rate) while preventing contamination of processing equipment.

Specifically, the lower the extrudability coefficient, the better the extrudability (processability). The polyester resin mixture according to the present invention may have an extrudability coefficient of 5.0 or less, 4.5 or less, 4.0 or less, 3.5 or less, 3.0 or less, 2.0 or less, or 1.0 or less. More specifically, the polyester resin mixture may have an extrudability coefficient of 0.1 to 6.0, 0.15 to 5.0, 0.2 to 4.5, 0.25 to 4.0, 0.3 to 3.5, 0.3 to 3.0, 0.4 to 2.0, or 0.5 to 1.0.

The polyester resin mixture according to the present invention may comprise a recycled component in an amount of 30% by weight or more based on the total weight of the polyester resin mixture. Specifically, the polyester resin mixture may comprise the recycled component as defined above in an amount of 30 to 90% by weight, 30 to 88% by weight, 33 to 85% by weight, or 35 to 80% by weight. Even though the polyester resin mixture according to the present invention comprises a relatively high content of a recycled component, it comprises a polyester copolymer prepared by optimizing the type and amount of a recycled monomer and raw material monomers. Thus, it secures extrudability, stretchability, and the like at the required level, and it can be used to manufacture polyester articles with excellent physical properties and/or quality.

**Process for preparing a polyester resin mixture**

The present invention provides a process for preparing the polyester resin mixture described above. Specifically, the process for preparing a polyester resin mixture according to the present invention comprises feeding a recycled monomer, a dicarboxylic acid compound, and a diol compound to a reactor and carrying out an esterification reaction at a pressure of 0 to 10.0 kgf/cm$^2$ and a temperature of 150 to 300°C to obtain a reactant; subjecting the reactant to a polycondensation reaction to obtain a polyester copolymer; and mixing the polyester copolymer with polyethylene terephthalate.

The step of obtaining a reactant may be carried out by feeding the respective monomers into a reactor and performing an esterification reaction (transesterification reaction) under specific reaction conditions. Details on the recycled monomer, dicarboxylic acid compound, and diol compound fed to a reactor are the same as those for the polyester resin mixture.

The amount of the recycled monomer fed to a reactor may be 1 to 95% by weight, 3 to 80% by weight, 5 to 75% by weight, or 7 to 70% by weight, based on the total weight of the composition (slurry) for preparing a polyester copolymer. In addition, the amount of the dicarboxylic acid compound fed to a reactor may be 0 to 50% by weight, greater than 0 to 25% by weight, 0 to 15% by weight, 1 to 10% by weight, or 1 to 5% by weight, based on the total weight of the composition (slurry) for preparing a polyester copolymer. In addition, the amount of the diol compound fed to a reactor may be 0 to 50% by weight, 1 to 35% by weight, 2 to 30% by weight, 3 to 25% by weight, 4 to 20% by weight, or 4 to 15% by weight, based on the total weight of the composition (slurry) for preparing a polyester copolymer.

Meanwhile, additives such as catalysts, stabilizers, colorants, crystallizing agents, antioxidants, branching agents, and the like may be further added to the reactor to facilitate the esterification reaction and/or polycondensation reaction and enhance the physical properties of the resulting polyester copolymer.

The catalyst may be methylates of sodium and magnesium; acetates, borates, or fatty acid salts of Zn, Cd, Mn, Co, Ca, and Ba; and oxides or hydrates of Mg, Pb, Mn, Ti, Zn, Sb, and Ge.

As the stabilizer, a phosphorus-based compound such as phosphoric acid, trimethyl phosphate, and triethyl phosphate may be used.

As the colorant, organic compounds such as cobalt-based compounds, anthraquinone-based compounds, perinone-based compounds, azo-based compounds, and methine-based compounds (for example, cobalt acetate, cobalt propionate, Polysynthren Blue RLS toner of Clarient, and Solvaperm Red BB toner of Clarient) may be used.

As the crystallizing agent, a crystal nucleating agent, an ultraviolet absorber, a polyolefin resin, a polyamide resin, and the like may be used.

As the antioxidant, hindered phenol-based compounds, phosphite-based compounds, thioether-based compounds, or the like may be used.

As the branching agent, trimellitic anhydride, trimethylol propane, trimellitic acid, or the like may be used.

The esterification reaction may be carried out at a temperature of about 200 to 300°C, about 230 to 280°C, about 230 to 265°C, or about 245 to 255°C; and a pressure of 0 to 10.0 kgf/cm$^2$ (0 to 7,355.6 mmHg), greater than 0 to 5.0 kgf/cm$^2$ (greater than 0 to 3,677.8 mmHg), 0.1 to 3.0 kgf/cm$^2$ (73.6 to 2,206.7 mmHg), or 1.0 to 3.0 kgf/cm$^2$ (736 to 2,206.7 mmHg). In addition, the transesterification reaction may be carried out at a temperature of 150 to 270°C or 180 to 260°C; and a pressure of 0 to 5.0 kgf/cm$^2$ (0 to 3,677.8 mmHg), greater than 0 to 5.0 kgf/cm$^2$ (greater than 0 to 3,677.8 mmHg), or 0.1 to 3.0 kgf/cm$^2$ (73.6 to 2,206.7 mmHg). The pressure in kgf/cm$^2$ refers to gauge pressure, and the pressure in mmHg refers to absolute pressure.

The esterification reaction (transesterification reaction) may be carried out in a batch or continuous manner. The recycled monomer, dicarboxylic acid compound, and diol compound may each be added separately to a reactor or may be added in the form of a mixed slurry.

The step of obtaining a polyester copolymer may be carried out by polycondensing the reactant obtained through the esterification reaction. Specifically, the polycondensation may be carried out at a temperature of 150 to 300°C and a reduced pressure of 600 to 0.01 mmHg for 1 to 24 hours.

The mixing step may be carried out by mixing the polyester copolymer obtained through the polycondensation reaction with polyethylene terephthalate prepared in advance. The mixing may be carried out by a conventionally known method.

**Polyester film**

The present invention provides a polyester film, which is prepared from the polyester resin mixture. Specifically, the polyester film according to the present invention comprises a polyester copolymer comprising a repeat unit (a) derived from a recycled monomer, a repeat unit (b) derived from a dicarboxylic acid compound, and a repeat unit (c) derived from a diol compound; and polyethylene terephthalate, wherein, when the mixture is extruded to a thickness of 1 mm, the extrudability coefficient according to the above Equation 1 is 6 or less. As the polyester film according to the present invention is prepared from the polyester resin mixture described above, it can exhibit high transparency and the required heat shrinkage rate (target heat shrinkage rate) even if the content of recycled components is high.

Specifically, the polyester film according to the present invention may have a haze of 5% or less, 4% or less, 3% or less, 2.5% or less, 2% or less, or 1 % or less (e.g., 0 to 2%), based on a film thickness of 50 $\mu$m, as measured according to ASTM D1003-97, thereby exhibiting high transparency.

In addition, the polyester film according to the present invention has a low shrinkage start temperature of 65°C or lower; thus, when used in the production of heat-shrinkable labels for PET containers, it can be molded with excellent quality without cloudiness or deformation of the PET containers. Specifically, the polyester film according to the present invention has a maximum shrinkage rate of 30% or more, 40% or more, 50% or more, 55% or more, 60% or more, 65% or more, 70% or more, or 75% or more (e.g., 55 to 85%) at 95°C; thus, it can be efficiently applied as a heat-shrinkable film.

The polyester film according to the present invention may have a single-layer structure or a multilayer structure. Specifically, referring to Fig. 1 a), the polyester film (10) according to the present invention may have a single-layer structure composed only of a resin layer (11) made of the polyester resin mixture described above. In addition, referring to Fig. 1 b), the polyester film (10) according to the present invention may have a multilayer structure comprising a base layer (11) and at least one resin layer (12, 13). Here, the structure in which at least one resin layer (12, 13) is laminated on a base layer (11) is not limited to that shown in Fig. 1 b), and at least one resin layer may be laminated on the upper and lower parts of the base layer (11) in various structures.

When the polyester film according to the present invention has a multilayer structure, each layer is prepared from the polyester resin mixture described above. Here, the content ratios of the polyester copolymer and polyethylene terephthalate contained in each layer may be adjusted.

Specifically, in the formation of the base layer (11) from the polyester resin mixture described above comprising the polyethylene terephthalate and polyester copolymer, it may comprise the polyester resin mixture containing the polyethylene terephthalate and polyester copolymer at a weight ratio of 1:99 to 50:50. Thus, the base layer (11) may comprise the polyethylene terephthalate and polyester copolymer at a weight ratio of 1:99 to 50:50, specifically, a weight ratio of 2:98 to 45:55, a weight ratio of 3:97 to 35:65, or a weight ratio of 5:95 to 25:75.

In addition, in the formation of the at least one resin layer (12, 13) from the polyester resin mixture described above comprising the polyethylene terephthalate and polyester copolymer, it may comprise the polyester resin mixture containing the polyethylene terephthalate and polyester copolymer at a weight ratio of 10:90 to 99:1. Thus, the at least one resin layer (12, 13) may comprise the polyethylene terephthalate and polyester copolymer at a weight ratio of 10:90 to 99:1, specifically, a weight ratio of 10:90 to 85:15, a weight ratio of 10:90 to 80:20, or a weight ratio of 10:90 to 75:25.

As the polyethylene terephthalate and polyester copolymer are contained at the above weight ratio in each of the base layer (11) and the at least one resin layer (12, 13), it is possible to achieve a polyester film with excellent physical properties such as transparency and heat shrinkage even if the content of recycled components is high.

Specifically, the content of recycled components in the polyester film according to the present invention may be 30% by weight or more, 50% by weight or more, or 70% by weight or more (e.g., 30 to 75% by weight), based on the total weight of the polyester film. In addition, the content of polyethylene terephthalate in the polyester film according to the present invention may be 5% by weight or more, 15% by weight or more, or 30% by weight or more (e.g., 5 to 35% by weight), based on the total weight of the polyester film.

Meanwhile, the polyester film according to the present invention may be a uniaxially or biaxially stretched film. As a result, it may be excellent in transparency, heat shrinkability, thickness uniformity, and the like. Specifically, the polyester film according to the present invention may be a film uniaxially stretched by 1.5 to 6 times, 1.6 to 5.8 times, or 1.8 to 5.5 times in the transverse direction (TD). In addition, the polyester film according to the present invention may be a film uniaxially stretched by 1.1 to 5 times, 1.2 to 4.9 times, or 1.5 to 4.5 times in the longitudinal direction (MD). In addition, the polyester film according to the present invention may be a film biaxially stretched by 1.5 to 6 times, 1.6 to 5.8 times, or 1.8 to 5.5 times in the transverse direction (TD), and 1.1 to 5 times, 1.2 to 4.9 times, or 1.5 to 4.5 times in the longitudinal direction (MD).

**Process for preparing a polyester film**

The present invention provides a process for preparing the polyester film described above. Specifically, the process for preparing a polyester film according to the present invention comprises preparing an unstretched sheet from a polyester resin mixture, which comprises a polyester copolymer comprising a repeat unit (a) derived from a recycled monomer, a repeat unit (b) derived from a dicarboxylic acid compound, and a repeat unit (c) derived from a diol compound; and polyethylene terephthalate, wherein, when the mixture is extruded to a thickness of 1 mm, the extrudability coefficient according to the above Equation 1 is 6 or less; and stretching the unstretched sheet.

The step of preparing an unstretched sheet may be carried out by extruding the polyester resin mixture described above. Here, when the polyester film has a multilayer structure, polyester resin mixtures for forming the respective layers are prepared and co-extruded to prepare an unstretched sheet. The extrusion of the polyester resin mixture may be carried out in a temperature range of about 230 to 310°C, about 240 to 300°C, or about 250 to 290°C.

The step of stretching the unstretched sheet may be carried out by uniaxial stretching or biaxial stretching. The uniaxial stretching refers to stretching the unstretched sheet in either the longitudinal direction (MD) or the transverse direction (TD) of the unstretched sheet. The biaxial stretching may be carried out by simultaneously or sequentially stretching the unstretched sheet in the longitudinal direction (MD) and the transverse direction (TD).

The stretching ratio of the unstretched sheet in the longitudinal direction (MD) may be 1.1 to 5 times, 1.2 to 4.9 times, or 1.5 to 4.5 times. In addition, the stretching ratio of the unstretched sheet in the transverse direction (TD) may be 1.5 to 6 times, 1.6 to 5.8 times, or 1.8 to 5.5 times. As the stretching ratio in each of the longitudinal direction (MD) and the transverse direction (TD) is within the above range, a polyester film having a uniform thickness and the required shrinkage rate can be obtained.

The film obtained through the stretching may be further subjected to commonly known heat setting, relaxation, and cooling steps, if necessary.

## Mode for the Invention

Hereinafter, the present invention will be described in more detail with reference to embodiments. However, these examples are provided only for illustration purposes, and the present invention is not limited thereto.

## <Preparation of a polyester copolymer>

### [Polymerization Example 1]

A 10-liter reactor equipped with a column and a condenser that can be cooled by water was charged with recycled bis-2-hydroxyethyl terephthalate (r-BHET, 1,471.5 g), terephthalic acid (TPA, 2,043.6 g), ethylene glycol (EG, 373.8 g), 1,4-cyclohexanedimethanol (CHDM, 826.4 g), and diethylene glycol (DEG, 211.1 g), followed by the addition thereto of titanium dioxide ($TiO_2$, 1.0 g) as a catalyst, phosphoric acid (1.5 g) as a stabilizer, and a blue toner (0.006 g) and a red toner (0.004 g) as a coloring agent.

Subsequently, nitrogen was injected into the reactor to make the reactor pressurized by 2.0 kgf/cm$^2$ higher than normal pressure (absolute pressure: 2,231.1 mmHg). Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 265°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

### [Polymerization Example 2]

A 10-liter reactor equipped with a column and a condenser that can be cooled by water was charged with recycled bis-2-hydroxyethyl terephthalate (r-BHET, 2,944.0 g), terephthalic acid (TPA, 1,130.0 g), ethylene glycol (EG, 26.2 g), and 1,4-cyclohexanedimethanol (CHDM, 839.8 g), followed by the addition thereto of titanium dioxide ($TiO_2$, 1.0 g) as a catalyst, phosphoric acid (1.5 g) as a stabilizer, and cobalt acetate (0.7 g) as a coloring agent.

Subsequently, nitrogen was injected into the reactor to make the reactor pressurized by 1.0 kgf/cm$^2$ higher than normal pressure (absolute pressure: 1,495.6 mmHg). Then, the temperature of the reactor was raised to 220°C over 90 minutes and maintained at 220°C for 2 hours, and the temperature was then raised again to 255°C over 2 hours. Thereafter, an esterification reaction was carried out at a temperature of 255°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 285°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.75 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**[Polymerization Example 3]**

A 10-liter reactor equipped with a column and a condenser that can be cooled by water was charged with recycled bis-2-hydroxyethyl terephthalate (r-BHET, 3,653.7 g), terephthalic acid (TPA, 713.2 g), 1,4-cyclohexanedimethanol (CHDM, 564.9 g), and diethylene glycol (DEG, 336.6 g), followed by the addition thereto of titanium dioxide (TiO$_2$, 1.0 g) as a catalyst, phosphoric acid (1.5 g) as a stabilizer, and a blue toner (0.008 g) and a red toner (0.004 g) as a coloring agent.

Subsequently, nitrogen was injected into the reactor to make the reactor pressurized by 2.0 kgf/cm$^2$ higher than normal pressure (absolute pressure: 2,231.1 mmHg). Then, the temperature of the reactor was raised to 220°C over 90 minutes and maintained at 220°C for 2 hours, and the temperature was then raised again to 255°C over 2 hours. Thereafter, an esterification reaction was carried out at a temperature of 255°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 285°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**[Polymerization Example 4]**

A 10-liter reactor equipped with a column and a condenser that can be cooled by water was charged with recycled bis-2-hydroxyethyl terephthalate (r-BHET, 1,777.6 g), terephthalic acid (TPA, 1,895.5 g), ethylene glycol (EG, 1,347.4 g), 1,4-cyclohexanedimethanol (CHDM, 265.2 g), diethylene glycol (DEG, 242.0 g), and a CHDM derivative (comprising 4-(hydroxymethyl)cyclohexylmethyl-4-(hydroxymethyl)cyclohexanecarboxylate and 4-(4-(hydroxymethyl)cyclohexylmethoxymethyl)cyclohexylmethanol at a molar ratio of 1:3, 345.5 g), followed by the addition thereto of germanium dioxide (GeO$_2$, 1.0) as a catalyst, phosphoric acid (1.5 g) as a stabilizer, and a blue toner (0.020 g) and a red toner (0.008 g) as a coloring agent.

Subsequently, nitrogen was injected into the reactor to make the reactor pressurized by 0.5 kgf/cm$^2$ higher than normal pressure (absolute pressure: 1,127.8 mmHg). Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 275°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.83 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**[Polymerization Example 5]**

A 10-liter reactor equipped with a column and a condenser that can be cooled by water was charged with recycled bis-2-hydroxyethyl terephthalate (r-BHET, 3,222.7 g), dimethyl terephthalate (DMT, 1,158.3 g), ethylene glycol (EG, 127.3 g), 1,4-cyclohexanedimethanol (CHDM, 618.0 g), and diethylene glycol (DEG, 272.4 g), followed by the addition thereto of Mn (II) acetate tetrahydrate (1.5 g) and antimony trioxide ($Sb_2O_3$, 1.8 g) as a catalyst, phosphoric acid (1.5 g) as a stabilizer, and cobalt acetate (0.7 g) as a coloring agent.

Subsequently, nitrogen was injected into the reactor to make the reactor pressurized by 0.1 kgf/$cm^2$ higher than normal pressure (absolute pressure: 833.6 mmHg). Then, the temperature of the reactor was raised to 220°C over 90 minutes and maintained at 220°C for 2 hours, and the temperature was then raised again to 240°C over 2 hours. Thereafter, an esterification reaction was carried out at a temperature of 240°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 265°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.75 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**[Polymerization Example 6]**

A 10-liter reactor equipped with a column and a condenser that can be cooled by water was charged with recycled bis-2-hydroxyethyl terephthalate (r-BHET, 522.0 g), terephthalic acid (TPA, 2,759.9 g), isophthalic acid (IPA, 341.1 g), ethylene glycol (EG, 127.3 g), 1,4-cyclohexanedimethanol (CHDM, 852.8 g), and a CHDM derivative (comprising 4-(hydroxymethyl)cyclohexylmethyl-4-(hydroxymethyl)cyclohexanecarboxylate and 4-(4-(hydroxymethyl)cyclohexylmethoxymethyl)cyclohexylmethanol at a molar ratio of 1:3, 350.5 g), followed by the addition thereto of germanium dioxide ($GeO_2$, 1.0) as a catalyst, phosphoric acid (1.5 g) as a stabilizer, and a blue toner (0.012 g) and a red toner (0.004 g) as a coloring agent.

Subsequently, nitrogen was injected into the reactor to make the reactor pressurized by 1.0 kgf/$cm^2$ higher than normal pressure (absolute pressure: 1,495.6 mmHg). Then, the temperature of the reactor was raised to 220°C over 90 minutes and maintained at 220°C for 2 hours, and the temperature was then raised again to 255°C over 2 hours. Thereafter, an esterification reaction was carried out at a temperature of 255°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 285°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**[Polymerization Example 7]**

A 10-liter reactor equipped with a column and a condenser that can be cooled by water was charged with recycled bis-2-hydroxyethyl terephthalate (r-BHET, 1,432.4 g), dimethyl terephthalate (DMT, 2,813.3 g), neopentyl glycol (NPG, 187.3 g), and diethylene glycol (DEG, 294.1 g), followed by the addition thereto of germanium dioxide (GeO$_2$, 1.0) and titanium dioxide (TiO$_2$, 1.0 g) as a catalyst, phosphoric acid (1.5 g) as a stabilizer, and a blue toner (0.006 g) and a red toner (0.004 g) as a coloring agent.

Subsequently, nitrogen was injected into the reactor to make the reactor pressurized by 0.5 kgf/cm$^2$ higher than normal pressure (absolute pressure: 1,127.8 mmHg). Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 275°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.79 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**[Comparative Polymerization Example 1]**

A 10-liter reactor equipped with a column and a condenser that can be cooled by water was charged with terephthalic acid (TPA, 3,419.2 g), ethylene glycol (EG, 2,617.9 g), and diethylene glycol (DEG, 150.4 g), followed by the addition thereto of germanium dioxide (GeO$_2$, 1.0) as a catalyst and phosphoric acid (1.5 g) as a stabilizer.

Subsequently, nitrogen was injected into the reactor to make the reactor pressurized by 1.0 kgf/cm$^2$ higher than normal pressure (absolute pressure: 1,495.6 mmHg). Then, the temperature of the reactor was raised to 220°C over 90 minutes and maintained at 220°C for 2 hours, and the temperature was then raised again to 265°C over 2 hours. Thereafter, an esterification reaction was carried out at a temperature of 265°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 275°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.60 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**[Comparative Polymerization Example 2]**

A 10-liter reactor equipped with a column and a condenser that can be cooled by water was charged with terephthalic acid (TPA, 3,067.0 g), neopentyl glycol (NPG, 210.6 g), and diethylene glycol (DEG, 211.1 g), followed by the addition thereto of germanium dioxide (GeO$_2$, 1.0) as a catalyst and phosphoric acid (1.5 g) as a stabilizer.

Subsequently, nitrogen was injected into the reactor to make the reactor pressurized by 2.0 kgf/cm$^2$ higher than normal pressure (absolute pressure: 2,231.1 mmHg). Then, the temperature of the reactor was raised to 220°C over 90 minutes and maintained at 220°C for 2 hours, and the temperature was then raised again to 265°C over 2 hours. Thereafter, an esterification reaction was carried out at a temperature of 265°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**[Comparative Polymerization Example 3]**

A 10-liter reactor equipped with a column and a condenser that can be cooled by water was charged with terephthalic acid (TPA, 3,005.3 g), ethylene glycol (EG, 1,088.8 g), 1,4-cyclohexanedimethanol (CHDM, 834.3 g), and diethylene glycol (DEG, 211.1 g), followed by the addition thereto of titanium dioxide ($TiO_2$, 1.0 g) as a catalyst and phosphoric acid (1.5 g) as a stabilizer.

Subsequently, nitrogen was injected into the reactor to make the reactor pressurized by 2.0 $kgf/cm^2$ higher than normal pressure (absolute pressure: 2,231.1 mmHg). Then, the temperature of the reactor was raised to 220°C over 90 minutes and maintained at 220°C for 2 hours, and the temperature was then raised again to 255°C over 2 hours. Thereafter, an esterification reaction was carried out at a temperature of 255°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 285°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**[Comparative Polymerization Example 4]**

A 10-liter reactor equipped with a column and a condenser that can be cooled by water was charged with terephthalic acid (TPA, 2,791.0 g), isophthalic acid (IPA, 310.1 g), ethylene glycol (EG, 1,127.0 g), 1,4-cyclohexanedimethanol (CHDM, 852.8 g), and diethylene glycol (DEG, 300.0 g), followed by the addition thereto of germanium dioxide ($GeO_2$, 1.0 g) as a catalyst, phosphoric acid (1.5 g) as a stabilizer, and a blue toner (0.012 g) and a red toner (0.004 g) as a coloring agent.

Subsequently, nitrogen was injected into the reactor to make the reactor pressurized by 2.0 $kgf/cm^2$ higher than normal pressure (absolute pressure: 2,231.1 mmHg). Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 265°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.78 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester copolymer.

**<Preparation of a polyester resin mixture>**

**[Example 1]**

The polyester copolymer obtained in Polymerization Example 1 and recycled PET were mixed at a weight ratio of 90:10 to prepare a polyester resin mixture. Specifically, a recycled PET resin prepared by crushing and washing waste plastic to obtain flakes and melting and extruding them for re-pelletization was dry-mixed with the separately pelletized polyester copolymer of Polymerization Example 1 at room temperature, which was then dried at 50 to 150°C to prepare a polyester resin mixture.

**[Examples 2 to 7]**

Polyester resin mixtures were each prepared in the same manner as in Example 1, except that the composition was changed as shown in Table 1 below.

**[Comparative Examples 1 to 4]**

Polyester resin mixtures were each prepared in the same manner as in Example 1, except that the composition was changed as shown in Table 1 below.

[Table 1]

| | Polyester copolymer (x) | | PET (y) | Mixing ratio (x:y) | Content of total recycled components in the polyester resin mixture (wt%) |
|---|---|---|---|---|---|
| | Polymerization Example | Recycled r-BHET content (wt%) | | | |
| Ex. 1 | Polym. Ex. 1 | 30 | MR-PET | 90:10 | 37 |
| Ex. 2 | Polym. Ex. 2 | 60 | CR-PET | 80:20 | 68 |
| Ex. 3 | Polym. Ex. 3 | 70 | MR-PET | 70:30 | 79 |
| Ex. 4 | Polym. Ex. 4 | 30 | CR-PET | 60:40 | 58 |
| Ex. 5 | Polym. Ex. 5 | 60 | Virgin-PET | 50:50 | 30 |
| Ex. 6 | Polym. Ex. 6 | 9 | CR-PET | 40:60 | 64 |
| Ex. 7 | Polym. Ex. 7 | 30 | CR-PET | 40:60 | 72 |
| C. Ex. 1 | C. Polym. Ex. 1 | 0 | MR-PET | 0:100 | 100 |
| C. Ex. 2 | C. Polym. Ex. 2 | 0 | - | 100:0 | 0 |
| C. Ex. 3 | C. Polym. Ex. 3 | 0 | MR-PET | 50:50 | 50 |
| C. Ex. 4 | C. Polym. Ex. 4 | 0 | CR-PET | 50:50 | 50 |

MR-PET: TPA/IPA/EG copolymer, intrinsic viscosity (IV): 0.75 dl/g, crystallization temperature: 130°C, melting point: 255°C

CR-PET: TPA/IPA/EG copolymer, intrinsic viscosity (IV): 0.80 dl/g, crystallization temperature: 130°C, melting point: 245°C

Virgin-PET: TPA/IPA/EG copolymer, intrinsic viscosity (IV): 0.75 dl/g, crystallization temperature: 135°C, melting point: 240°C

**<Preparation of a single-layer polyester film>**

**[Preparation Examples 1 to 7 and Comparative Preparation Examples 1 to 4]**

The polyester resin mixtures obtained in the Preparation Examples and Comparative Preparation Examples were each extruded through a die at a temperature of 260 to 290°C and then cooled to 20 to 50°C to prepare an unstretched sheet. Thereafter, the unstretched sheet was reheated to 75 to 90°C and stretched by 5 times in the transverse direction to prepare a polyester film having a thickness of 40 µm.

**<Preparation of a multilayer polyester film>**

**[Preparation Examples 8 to 12 and Comparative Preparation Examples 5 to 7]**

(1) Preparation of a polyester resin mixture

Polyester resin mixtures were each prepared in the same manner as in Example 1, except that the composition was changed as shown in Table 2 below.

(2) Preparation of a multilayer polyester film

The polyester resin mixture for forming a base layer and those for forming first and second resin layers, each having the composition shown in Table 2 below, were co-extruded through a die at a temperature of 260 to 290°C and then cooled at 20 to 50°C to prepare an unstretched sheet having a three-layer structure in which the first and second resin layers were laminated on both sides of the base layer. Thereafter, the unstretched sheet was reheated to 75 to 90°C and stretched by 5 times in the transverse direction to prepare a polyester film having a thickness of 50 µm (first resin layer 5 µm; base layer 40 µm; and second resin layer 5 µm).

[Table 2]

| | Polyester resin mixture | | First resin layer (mixing ratio (x:y)) | Base layer (mixing ratio (x:y)) | Second resin layer (mixing ratio (x:y)) | Content of total recycled components in the polyester film (wt%) | Content of total PET in the polyester film (wt%) |
|---|---|---|---|---|---|---|---|
| | Polyester copolymer (x) | PET (y) | | | | | |
| Prep. Ex. 8 | Polym. Ex. 1 | MR-PET | 90:10 | 95:5 | 90:10 | 30 | 6 |
| Prep. Ex. 9 | Polym. Ex. 2 | MR-PET | 70:30 | 95:5 | 70:30 | 58 | 10 |
| Prep. Ex. 10 | Polym. Ex. 3 | CR-PET | 50:50 | 95:5 | 50:50 | 70 | 14 |
| Prep. Ex. 11 | Polym. Ex. 4 | CR-PET | 50:50 | 80:20 | 50:50 | 50 | 26 |
| Prep. Ex. 12 | Polym. Ex. 5 | CR-PET | 30:70 | 90:10 | 30:70 | 70 | 22 |
| C. Prep. Ex. 5 | C. Polym. Ex. 2 | MR-PET | 90:10 | 80:20 | 90:10 | 18 | 18 |
| C. Prep. Ex. 6 | C. Polym. Ex. 3 | MR-PET | 100:0 | 70:30 | 100:0 | 24 | 24 |
| C. Prep. Ex. 7 | C. Polym. Ex. 4 | CR-PET | 50:50 | 75:25 | 50:50 | 30 | 30 |
| MR-PET: TPA/IPA/EG copolymer, intrinsic viscosity (IV): 0.75 dl/g, crystallization temperature: 130°C, melting point: 255°C CR-PET: TPA/IPA/EG copolymer, intrinsic viscosity (IV): 0.80 dl/g, crystallization temperature: 130°C, melting point: 245°C | | | | | | | |

**[Test Example 1] Extrudability (roll plate out)**

The extrudability of the polyester resin mixtures and polyester films was evaluated using Breyer equipment with the following specifications.

-   Supplier: Breyer GmbH (Germany, December, 2000)

-   Main extruder: single screw extruder with or without venting section

- Diameter: 45 mm

- L/D: 33:1

- Evaluation method: Extruded at 260°C to form a sheet sample with a thickness of 1 mm. After 1 hour from the start of sheet extrusion, the plate-out phenomenon of the roll during extrusion was subjected to sensory evaluation according to the following evaluation criteria.

- Evaluation criteria: No roll contamination after sheet extrusion "×"; slight roll contamination after sheet extrusion "Δ"; roll contamination after sheet extrusion "○"

**[Test Example 2] Extrudability coefficient**

The extrudability coefficient of the polyester resin mixtures was calculated through gas chromatography (GC) and Equation 1 below. Specifically, for quantitative analysis of oligomers and short molecules by thermal decomposition of the polyester resin mixture (polyester copolymer contained in the polyester resin mixture), gas chromatography analysis was performed under the following conditions. Gaseous substances generated under pretreatment conditions were collected and converted to the total area/g in the graph.

In the pretreatment, the substances generated when the polyester resin mixture (polyester copolymer contained in the polyester resin mixture) pellet was heated at 260°C in an air atmosphere for 1 hour were collected in a GC head space. The total area was quantified (unit area/g) for the collected substances. A higher total area/g value means that there are more unreacted substances and oligomers in the polyester resin mixture (or in the polyester copolymer), indicating that the amount of short molecules generated by thermal decomposition increases. Meanwhile, oligomers (area/g) detected through gas chromatography (GC) analysis usually refer to substances (polymers) with a molecular weight of 1,000 g/mole or less.

* Measurement conditions for gas chromatography (GC)

- Model: Triplus 500 (Thermo)
- Incubation temperature: 260°C
- Incubation time: 60 min
- Loop temperature: 260°C
- Loop volume: 1 mL
- Injection time: 0.5 min
- Injection mode: standard

[Equation 1]

$$\text{Extrudability coefficient} = A / 10^7$$

A is the quantitative analysis value (area/g) of oligomers confirmed through gas chromatography (GC) analysis of the polyester copolymer.

**[Test Example 3] Out-gas**

Out-gas generation from the polyester resin mixture and polyester film was evaluated using the equipment used to evaluate extrudability. Specifically, out-gas generated when the mixture was compressed on the roll during the sheet extrusion process was subjected to sensory evaluation according to the following evaluation criteria (checked 6 times at 10-minute intervals).

- Evaluation criteria: no out-gas generation "◎"; almost no out-gas generation "○"; slight out-gas generation "Δ"; continuous out-gas generation "×"

**[Test Example 4] Stretchability (fish eye)**

Upon sheet extrusion, it was stretched by 5 times in the transverse direction (TD) at Tg of the polyester resin mixture + 10°C, and the presence of fish eyes in the stretched film was subjected to visual and sensory evaluation according to the following evaluation criteria.

**EP 4 574 903 A1**

- Evaluation criteria: a large number of fish eyes "○"; slight generation of fish eyes "Δ"; almost no fish eyes "×"

The results of Test Examples 1 to 4 are shown in Tables 3 and 4 below.

[Table 3]

| | Extrudability (roll plate out) | Extrudability coefficient | Out-gas | | Stretchability (fish eye) |
| --- | --- | --- | --- | --- | --- |
| | | | Resin mixture (or film) out-gas measured value | Out-gas measurement result | |
| Prep. Ex. 1 | × | 1.70 | 2.E+08 | ○ | × |
| Prep. Ex. 2 | × | 0.69 | 7.E+07 | ◎ | × |
| Prep. Ex. 3 | × | 3.50 | 4.E+08 | ○ | × |
| Prep. Ex. 4 | × | 0.62 | 6.E+07 | ◎ | × |
| Prep. Ex. 5 | × | 2.89 | 3.E+08 | ○ | × |
| Prep. Ex. 6 | × | 0.59 | 6.E+07 | ◎ | × |
| Prep. Ex. 7 | × | 0.33 | 3.E+07 | ◎ | × |
| C. Prep. Ex. 1 | Δ | 10.00 | 1.E+09 | × | × |
| C. Prep. Ex. 2 | Δ | 15.00 | 2.E+09 | × | × |
| C. Prep. Ex. 3 | Δ | 9.10 | 9.E+08 | Δ | Δ |
| C. Prep. Ex. 4 | × | 4.15 | 4.E+08 | ○ | × |

[Table 4]

| | Extrudability (roll plate out) | Extrudability coefficient | Out-gas | | Stretchability (fish eye) |
| --- | --- | --- | --- | --- | --- |
| | | | Multilayer film out-gas measured value | Out-gas measurement result | |
| Prep. Ex. 8 | × | 1.33 | 1.E+08 | ◎ | × |
| Prep. Ex. 9 | × | 1.66 | 2.E+08 | ○ | × |
| Prep. Ex. 10 | × | 0.69 | 7.E+07 | ◎ | × |
| Prep. Ex. 11 | × | 0.64 | 6.E+07 | ◎ | × |
| Prep. Ex. 12 | × | 0.71 | 7.E+07 | ◎ | × |
| C. Prep. Ex. 5 | Δ | 14.10 | 1.E+09 | × | Δ |
| C. Prep. Ex. 6 | Δ | 8.63 | 9.E+08 | Δ | Δ |
| C. Prep. Ex. 7 | × | 5.61 | 6.E+08 | ○ | × |

Referring to Table 3 above, the polyester resin mixtures according to the present invention had an extrudability coefficient of 6 or less, indicating that there was little contamination of process equipment and out-gas generation, along with excellent stretchability during film stretching. In particular, the polyester resin mixtures according to the present invention in Examples 1 to 7 had lower extrudability coefficients and equal or better out-gas and stretchability as compared with the polyester resin mixture in Comparative Example 4 containing the virgin polyester copolymer of Comparative Polymerization Example 4 in which recycled monomers were not used during polymerization (see Preparation Examples 1 to 7 and Comparative Preparation Example 4). The above results support that the present invention can provide polyester articles with excellent physical properties and/or quality even when recycled monomers are used.

Meanwhile, referring to Table 4 above, when a multilayer polyester film using the polyester resin mixture according to the present invention was prepared, it was excellent in extrudability, processability, stretchability, and the like.

16

[Explanation of Reference Numerals]

10: polyester film
11: base layer
12: first resin layer
13: second resin layer

**Claims**

1. A polyester resin mixture, which comprises a polyester copolymer comprising a repeat unit (a) derived from a recycled monomer, a repeat unit (b) derived from a dicarboxylic acid compound, and a repeat unit (c) derived from a diol compound; and polyethylene terephthalate, wherein, when the mixture is extruded to a thickness of 1 mm, the extrudability coefficient according to the following Equation 1 is 6 or less:

$$[\text{Equation 1}]$$

$$\text{Extrudability coefficient} = A \,/\, 10^7$$

   in Equation 1, A is the quantitative analysis value (area/g) of oligomers confirmed through gas chromatography (GC) analysis of the polyester copolymer.

2. The polyester resin mixture of claim 1, wherein the recycled monomer is recycled bis-2-hydroxyethyl terephthalate (recycled-BHET).

3. The polyester resin mixture of claim 1, wherein the diol compound comprises at least one selected from the group consisting of isosorbide, ethylene glycol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, cyclohexanedimethanol, and cyclohexanedimethanol derivatives.

4. The polyester resin mixture of claim 1, wherein the dicarboxylic acid compound comprises at least one selected from the group consisting of terephthalic acid, isophthalic acid, dimethyl isophthalate, phthalic acid, dimethyl terephthalate, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

5. The polyester resin mixture of claim 1, wherein the polyester copolymer comprises a repeat unit ($c_1$) derived from diethylene glycol in an amount of 0 to 30% by mole, a repeat unit ($c_2$) derived from cyclohexanedimethanol in an amount of 0 to 45% by mole, a repeat unit ($c_3$) derived from a cyclohexanedimethanol derivative in an amount of 0 to 25% by mole, and a repeat unit ($c_4$) derived from neopentyl glycol in an amount of 0 to 45% by mole, based on the total number of moles of the repeat unit (c) derived from the diol compound.

6. The polyester resin mixture of claim 1, wherein the polyethylene terephthalate is one or more selected from the group consisting of mechanically recycled polyethylene terephthalate (mechanically-recycled-PET), chemically recycled polyethylene terephthalate (chemically-recycled-PET), and virgin polyethylene terephthalate (virgin-PET).

7. The polyester resin mixture of claim 1, wherein the content of a recycled component is 30% by weight or more based on the total weight of the polyester resin mixture.

8. A process for preparing a polyester resin mixture, which comprises:

   feeding a recycled monomer, a dicarboxylic acid compound, and a diol compound to a reactor and carrying out an esterification reaction at a pressure of 0 to 10.0 kgf/cm$^2$ and a temperature of 150 to 300°C to obtain a reactant;

subjecting the reactant to a polycondensation reaction to obtain a polyester copolymer; and

mixing the polyester copolymer with polyethylene terephthalate.

9. A polyester film, which is prepared from a polyester resin mixture comprising a polyester copolymer comprising a repeat unit (a) derived from a recycled monomer, a repeat unit (b) derived from a dicarboxylic acid compound, and a repeat unit (c) derived from a diol compound; and polyethylene terephthalate, wherein, when the mixture is extruded to a thickness of 1 mm, the extrudability coefficient according to the above Equation 1 is 6 or less:

$$[\text{Equation 1}]$$

$$\text{Extrudability coefficient} = A / 10^7$$

in Equation 1, A is the quantitative analysis value (area/g) of oligomers confirmed through gas chromatography (GC) analysis of the polyester copolymer.

10. The polyester film of claim 9, which has a single-layer structure or a multilayer structure.

11. The polyester film of claim 10, wherein the multilayer structure comprises a base layer and at least one resin layer,

the base layer comprises the polyethylene terephthalate and the polyester copolymer at a weight ratio of 1:99 to 50:50, and

the resin layer comprises the polyethylene terephthalate and the polyester copolymer at a weight ratio of 10:90 to 99: 1.

12. The polyester film of claim 9, which is a film uniaxially stretched by 1.5 to 6 times in the transverse direction (TD) or 1.1 to 5 times in the longitudinal direction (MD).

13. The polyester film of claim 9, which is a film biaxially stretched by 1.5 to 6 times in the transverse direction (TD) and 1.1 to 5 times in the longitudinal direction (MD).

14. A process for preparing a polyester film, which comprises:

preparing an unstretched sheet from a polyester resin mixture comprising a polyester copolymer comprising a repeat unit (a) derived from a recycled monomer, a repeat unit (b) derived from a dicarboxylic acid compound, and a repeat unit (c) derived from a diol compound; and polyethylene terephthalate, wherein, when the mixture is extruded to a thickness of 1 mm, the extrudability coefficient according to the above Equation 1 is 6 or less; and stretching the unstretched sheet:

$$[\text{Equation 1}]$$

$$\text{Extrudability coefficient} = A / 10^7$$

in Equation 1, A is the quantitative analysis value (area/g) of oligomers confirmed through gas chromatography (GC) analysis of the polyester copolymer.

[Fig. 1]

## INTERNATIONAL SEARCH REPORT

| International application No. |
| --- |
| **PCT/KR2023/011349** |

**A.    CLASSIFICATION OF SUBJECT MATTER**

**C08L 67/02**(2006.01)i; **C08G 63/60**(2006.01)i; **C08G 63/183**(2006.01)i; **C08J 5/18**(2006.01)i; **B29C 48/08**(2019.01)i; **B29C 48/18**(2019.01)i; **B29C 55/04**(2006.01)i; **B29C 55/12**(2006.01)i; **B32B 27/36**(2006.01)i

According to International Patent Classification (IPC) or to both national classification and IPC

**B.    FIELDS SEARCHED**

Minimum documentation searched (classification system followed by classification symbols)

C08L 67/02(2006.01); B29C 48/00(2019.01); B29C 48/08(2019.01); B29C 55/04(2006.01); C07C 67/52(2006.01); C07C 69/82(2006.01); C08G 63/78(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 폴리에틸렌테레프탈레이트(polyethylene terephthalate), 재생 단량체(recycled monomer), 필름(film), 연신(stretching)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0037267 A (SK CHEMICALS CO., LTD.) 06 April 2021 (2021-04-06)<br>    See claims 1-18; and paragraphs [0135]-[0151]. | 1-14 |
| Y | KR 10-2020-0061948 A (LOTTE CHEMICAL CORPORATION) 03 June 2020 (2020-06-03)<br>    See abstract; claim 7; and paragraph [0069]. | 1-14 |
| A | KR 10-2021-0052313 A (SKC CO., LTD. et al.) 10 May 2021 (2021-05-10)<br>    See entire document. | 1-14 |
| A | US 2004-0019234 A1 (INADA, S. et al.) 29 January 2004 (2004-01-29)<br>    See entire document. | 1-14 |
| A | KR 10-0490000 B1 (AIES CO., LTD.) 17 May 2005 (2005-05-17)<br>    See entire document. | 1-14 |

☐ Further documents are listed in the continuation of Box C.          ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **13 November 2023** | **14 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
#### Information on patent family members

International application No.

**PCT/KR2023/011349**

| Patent document cited in search report | | | Publication date (day/month/year) | Patent family member(s) | | | Publication date (day/month/year) |
|---|---|---|---|---|---|---|---|
| KR | 10-2021-0037267 | A | 06 April 2021 | CN | 114514286 | A | 17 May 2022 |
| | | | | EP | 4036168 | A1 | 03 August 2022 |
| | | | | EP | 4036168 | A4 | 31 May 2023 |
| | | | | JP | 2022-550012 | A | 30 November 2022 |
| | | | | US | 2022-0389214 | A1 | 08 December 2022 |
| | | | | WO | 2021-060686 | A1 | 01 April 2021 |
| KR | 10-2020-0061948 | A | 03 June 2020 | None | | | |
| KR | 10-2021-0052313 | A | 10 May 2021 | CN | 113068403 | A | 02 July 2021 |
| | | | | CN | 113068403 | B | 19 September 2023 |
| | | | | CN | 113166528 | A | 23 July 2021 |
| | | | | EP | 3854839 | A1 | 28 July 2021 |
| | | | | EP | 3854839 | A4 | 16 March 2022 |
| | | | | EP | 3868813 | A1 | 25 August 2021 |
| | | | | EP | 3868813 | A4 | 16 February 2022 |
| | | | | JP | 2022-510105 | A | 26 January 2022 |
| | | | | JP | 2022-510146 | A | 26 January 2022 |
| | | | | KR | 10-2021-0052211 | A | 10 May 2021 |
| | | | | KR | 10-2021-0052212 | A | 10 May 2021 |
| | | | | KR | 10-2258534 | B1 | 31 May 2021 |
| | | | | KR | 10-2258535 | B1 | 31 May 2021 |
| | | | | KR | 10-2263118 | B1 | 10 June 2021 |
| | | | | US | 11396577 | B2 | 26 July 2022 |
| | | | | US | 2022-0002477 | A1 | 06 January 2022 |
| | | | | US | 2022-0098377 | A1 | 31 March 2022 |
| | | | | WO | 2021-086082 | A1 | 06 May 2021 |
| US | 2004-0019234 | A1 | 29 January 2004 | CN | 1195727 | C | 06 April 2005 |
| | | | | CN | 1320113 | A | 31 October 2001 |
| | | | | CN | 1511821 | A | 14 July 2004 |
| | | | | CN | 1511823 | A | 14 July 2004 |
| | | | | EP | 1120394 | A1 | 01 August 2001 |
| | | | | EP | 1120394 | A4 | 24 July 2002 |
| | | | | EP | 1120394 | B1 | 08 September 2004 |
| | | | | JP | 2001-048834 | A | 20 February 2001 |
| | | | | JP | 3782907 | B2 | 07 June 2006 |
| | | | | KR | 10-0701842 | B1 | 02 April 2007 |
| | | | | KR | 10-2001-0086254 | A | 10 September 2001 |
| | | | | US | 6630601 | B1 | 07 October 2003 |
| | | | | US | 7193104 | B2 | 20 March 2007 |
| | | | | WO | 01-10812 | A1 | 15 February 2001 |
| | | | | WO | 01-10812 | A9 | 26 April 2001 |
| KR | 10-0490000 | B1 | 17 May 2005 | CN | 1133681 | C | 07 January 2004 |
| | | | | CN | 1327459 | A | 19 December 2001 |
| | | | | EP | 1156069 | A1 | 21 November 2001 |
| | | | | EP | 1156069 | A4 | 18 June 2003 |
| | | | | EP | 1156069 | B1 | 31 May 2006 |
| | | | | JP | 3595304 | B2 | 02 December 2004 |
| | | | | KR | 10-2001-0101251 | A | 14 November 2001 |
| | | | | US | 6350851 | B1 | 26 February 2002 |
| | | | | WO | 01-29110 | A1 | 26 April 2001 |

Form PCT/ISA/210 (patent family annex) (July 2022)

**EP 4 574 903 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20130041205